# EUROPÄISCHE PATENTSCHRIFT

(11) **EP 0 408 896 B1**
(45) Veröffentlichungstag und Bekanntmachung des Hinweises auf die Patenterteilung: **03.02.1993**
(21) Anmeldenummer: 90111275.5
(22) Anmeldetag: 15.06.1990
(51) Int. Cl.: B65C 9/25, B65C 1/02

(54) **Vorrichtung zum Aufkleben von Heissklebefolien**
Device for applying thermo-adhesive labels
Dispositif pour appliquer des étiquettes thermo-adhésives

(30) Priorität: 19.07.1989 CH 2697/89
(43) Veröffentlichungstag der Anmeldung: 23.01.1991
(73) Patentinhaber: Landis & Gyr Business Support AG, 6301 Zug (CH)
(72) Erfinder: Antes, Gregor, CH-8816 Hirzel (CH); Donders, Joseph Johannes, CH-6314 Unterägeri (CH)
(74) Vertreter: Müller, Hans-Jürgen, Dipl.-Ing.

(56) Entgegenhaltungen:
- EP-A- 0 146 199
- FR-A- 2 282 335
- GB-A- 2 193 927
- NL-A- 6 713 333
- US-A- 2 492 908
- US-A- 4 181 554

## Beschreibung

Die Erfindung bezieht sich auf eine Vorrichtung zum Aufkleben von Heissklebefolien der im Oberbegriff des Anspruchs 1 genannten Art.

Eine solche Vorrichtung eignet sich zum Aufkleben von Etiketts z. B. als Echtheitsmerkmale auf Dokumente oder Wertpapiere aller Art.

In der EP-A-210 619 ist der Aufbau einer Heissprägefolie beschrieben, welche aus einem mehrlagigen Schichtverbund besteht. Eine äusserst dünne, z. B. eine Information tragende Dekorschicht weist auf der einen Seite eine mit Wärme aktivierbare Kleberschicht auf, während die andere Seite mit einer Trennschicht auf ein Trägerband aus Papier oder Kunststoff aufgebracht ist, das eine für die Verarbeitung notwendige Zugfestigkeit gewährleistet.

Aus DE-A-27 33 286, DE-A-30 44 456 usw. bekannte Vorrichtungen zum Aufbringen der Dekorschicht der Heissprägefolie auf ein Substrat weisen einen Stempel mit einer ebenen, auf eine vorbestimmte Temperatur gebrachten Grundfläche von vorbestimmter Form auf. Dieser Stempel presst die Kleberschicht der Heissprägefolie auf das Substrat und heizt durch den Träger und die Dekorschicht hindurch die Kleberschicht auf, bis der Kleber erweicht und eine genügende Haftung auf dem Substrat entwickelt. Nach dem Entfernen des Stempels wird der Träger vom Substrat abgehoben, wobei eine der Grundfläche des Stempels entsprechende Fläche der Dekorschicht vom Träger losgerissen wird, da sie mit dem Substrat fest verbunden ist. Dieser Trennvorgang begrenzt die Dicke und die Festigkeit der Informationsschicht.

Aus der DE-B-28 00 635 ist bekannt, dass die nach diesem Verfahren aufgebrachten Schichten nicht sehr kratz- und abriebfest sind.

In der US-A-4 826 213 ist die Herstellung eines Schichtverbunds für Etiketts mit einer Schutzschicht beschrieben. Ein Aufkleben direkt aus dem Schichtverbund auf das Substrat ist wegen der Zähigkeit der Schutzschicht nicht mehr möglich. Mittels eines Schneidstempels mit einem vorstehenden Messer werden die Etiketts zuerst aus diesem Schichtverbund abgetrennt und bis zu ihrer Verwendung in einer vorbestimmten Ordnung leicht ablösbar auf ein Trägerband aufgeklebt gelagert.

Eine Vorrichtung der eingangs genannten Gattung ist bereits in der NL-A-6 713 333 beschrieben. Dabei wird Wert darauf gelegt, daß nur die Ränder des Etiketts mit dem Substrat verschmolzen werden. Zu diesem Zweck ist das Stanzmesser mit einer schräg verlaufenden verhältnismäßig schmalen fläche versehen, um den Etikettenrand sehr viel stärker zu erwärmen als den übrigen Teil des Etiketts und um den Etikettenrand möglichst ein Stück weit in das Material des Substrats einzudrücken. Diese Vorrichtung eignet sich jedoch nicht für solche Etiketten, die mechanisch nicht genügend stabil sind und schon bei verhältnismäßig geringen Beanspruchungen zerreißen.

Darüber hinaus ist es bekannt (US-A-4 181 554), ein Polarisationsfilter in form einer folie auf eine LCD-Anzeige dadurch aufzukleben, daß das Filter zuerst mittels eines Messers aus einem Band des Filtermaterials ausgestanzt und dann mittels eines elastisch verformbaren Anpresskissen, das im unverformten Zustand eine gewölbte Unterseite aufweist, an einer ringförmigen Halterung unter Durchbiegen vorbeigedrückt und dann unter Verformen des Anpresskissens auf die LCD-Anzeige aufgedrückt wird. Hierbei geht es darum, das Polarisationsfilter blasenfrei aufzukleben.

Der Erfindung liegt die Aufgabe zugrunde, die eingangs genannte Vorrichtung mit einfachen Mitteln dahingehend zu verbessern, daß eine bessere Verbindung zwischen Etikett und Substrat erreichbar ist.

Die genannte Aufgabe wird erfindungsgemäss durch die Merkmale des Anspruchs 1 gelöst.

Nachfolgend werden Ausführungsbeispiele der Erfindung anhand der Zeichnungen näher erläutert.

Es zeigt:
Figur 1 eine Vorrichtung zum Aufkleben von Heissklebefolien mit einer Stanzmatrize im Querschnitt,
Figur 2 die Vorrichtung nach der Figur 1 beim Ausstanzen eines Etiketts,
Figur 3 die Vorrichtung nach der Figur 1 beim Aufkleben des Etiketts auf ein Substrat,
Figur 4 das Substrat mit einem aufgeklebten Etikett und
Figur 5 eine zweite Vorrichtung mit einem Messer zum Ausstanzen des Etiketts.

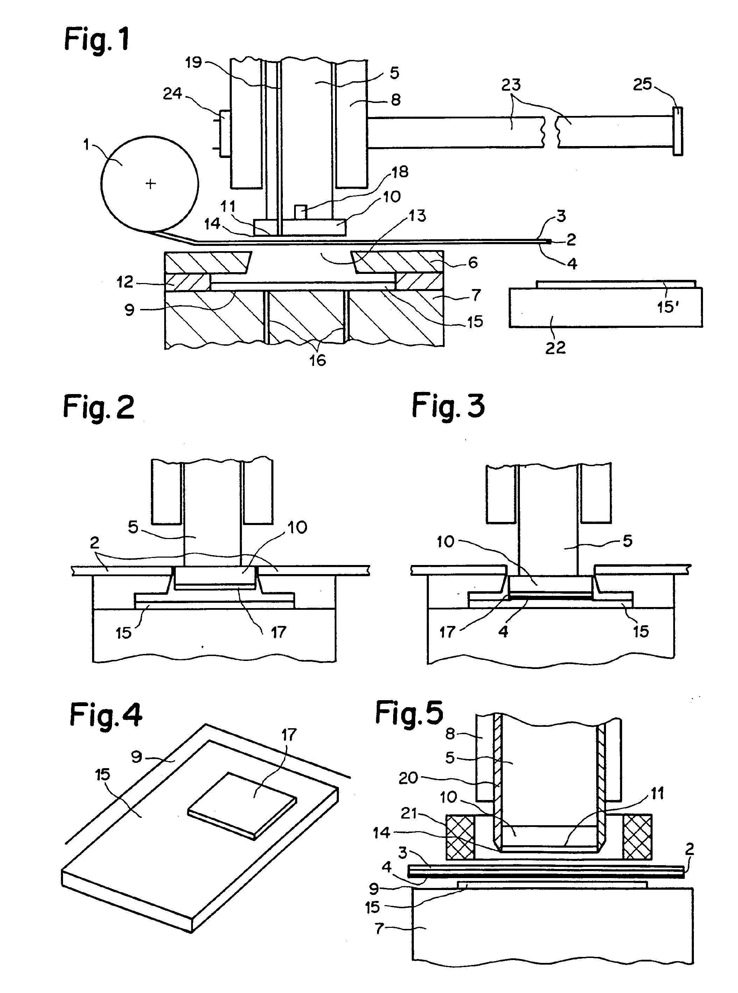

In der Figur 1 bedeutet 1 eine Vorratsrolle mit einem Band aus einer Heissklebefolie 2. Die Vorratsrolle 1 ist neben einer Vorrichtung zum Aufkleben von Heissklebefolien 2 angeordnet

Die Heissklebefolie 2 ist eine einseitig mit einem Heisskleber beschichtete Folie. Beispielsweise ist die Heissklebefolie 2 als mehrlagiger Schichtverbund ausgeführt, dessen eine Oberfläche aus einer z. B. transparenten, zähen Schutzschicht 3 gebildet ist. Die andere gegenüberliegenäe Oberfläche besteht aus einer mittels Wärme aktivierbaren Kleberschicht 4, dem Heisskleber. Dazwischen ist eine Informationen tragende, wenigstens aus einer Lage gebildete Schicht eingebettet, in der beispielsweise die Information als hier nicht gezeigte Motive in einem vorbestimmten Motivabstand angeordnet sind. Von bekannten Heissprägefolien unterscheidet sich die Heissklebefolie 2 durch die zusätzliche, fest im Schichtverbund eingebaute Schutzschicht 3.

Die Vorrichtung umfasst einen in seiner Längsachse verschiebbaren Stempel 5, eine Stanzmatrize 6 und ein Auflager 7 sowie hier nicht gezeigte Elemente für den Antrieb und die Steuerung. Das eine Ende des Stempels 5 ist in einer Führung 8 gelagert, die ein Verschieben des Stempels 5 senkrecht zur Stanzmatrize 6 bzw. zu einer Arbeitsfläche 9 des Auflagers 7 ermöglicht. Die Führung 8 enthält einen hier nicht gezeigten Antrieb zum Verschieben des Stempels 5. Das andere Ende des Stempels 5 trägt eine heizbare Platte 10 mit einer ebenen Grundfläche 11. Die Grundfläche 11 weist beispielsweise eine runde, ovale oder eine beliebige andere Form auf und ist in der Grösse und in der Form den Motiven der Heissklebefolie 2 angepasst.

Die Stanzmatrize 6 und die Platte 10 sind auswechselbar gestaltet, um die Vorrichtung schnell an eine andere Form bzw Grösse des Motivs anzupassen.

Die Stanzmatrize 6 ist mittels eines Distanzierstücks 12 etwas erhöht auf der Arbeitsfläche 8 befestigt und weist eine der Form der Grundfläche 11 unter Berücksichtigung der unterschiedlichen Arbeitstemperaturen der Stanzmatrize 6 und der Platte 10 angepasste Stanzöffnung 13 auf. Die Elemente 6 und 10 bilden ein aus dem Werkzeugbau an sich bekanntes Schneidwerkzeug. Beim Verschieben des Stempels 5 in Richtung der Arbeitsfläche 9 dringt die Platte 10 in die Stanzöffnung 13 ein, wobei beim Durchgang der Grundfläche 11 durch die Stanzöffnung 13 zwischen der Stanzmatrize 6 und der als Schneidkante 14 ausgebildeten Berandung der Grundfläche 11 eine Scherwirkung auf eine dazwischen eingeklemme Folie entsteht. In der Ruhestellung des Stempels 5 ist die Platte 10 so weit von der Stanzmatrize 6 abgehoben, dass die Heissklebefolie 2 zwischen der Grundfläche 11 und der Stanzmatrize 6 vorgezogen werden kann.

Ein unter der Stanzmatrize 6 durch das Distanzierstück 12 vorbestimmter Zwischenraum dient mit Vorteil zur Aufnahme eines Substrates 15, das beim Aufkleben auf der Arbeitsfläche 9 aufliegt. Mit Vorteil ist das Substrat 15 in einer vorbestimmten Lage mittels elektrostatischer oder mechanischer Kräfte auf der Arbeitsfläche 9 festgehalten. Beispielsweise kann das Substrat 15 unter der Wirkung von evakuierten Saugkanälen 16 fixiert werden, die die Arbeitsfläche 9 und das Auflager 7 durchdringen. Die Wege der Heissklebefolie 2 und der Substrate 15 kreuzen sich in der verlängert gedachten Achse des Stempels 5, beispielsweise unter einem Winkel von 90°, wie dies in der Figur 1 nur aus zeichnerischen Gründen dargestellt ist.

Das Substrat 15 ist beispielsweise ein Dokument, ein Ausweis, eine Banknote oder allgemein eine ebene Fläche aus einem Kunststoff, einem Papier usw., das auf der von der Arbeitsfläche 9 abgewandten Fläche des Substrats 15 wenigstens an einer vorbestimmten Stelle mit einem aus der Heissklebefolie 2 ausgestanzten Etikett 17 (Figur 2) zu bekleben ist.

Das Substrat 15 kann auch von einer nicht gezeigten Rolle als Band auf die Arbeitsfläche 9 zugeführt werden und erst nach dem Aufkleben des Etiketts 17 auf die vorbestimmten Stellen mittels nicht gezeigter Mittel in eine vorbestimmte Form geschnitten werden.

Zu Beginn des Aufklebevorgangs wird von der Vorratsrolle 1 unter einer leichten Vorspannung die Heissklebefolie 2 abgezogen und eben unterhalb der Platte 10 über die Stanzmatrize 6 geführt. Eine hier nicht gezeigte Steuereinrichtung bewirkt den Vorschub der Heissklebefolie 2 jeweils um einen Motivabstand, damit sich das nächste Motiv vorbestimmt ausgerichtet über der Stanzöffnung 13 befindet.

Auf ein Kommando der Steuereinrichtung wird anschliessend das Substrat 15 durch hier nicht gezeigte Mittel der Arbeitsfläche 9 zugeführt und festgehalten.

Auf ein weiteres Kommando verschiebt die Führung 8 den Stempel 5 aus seiner in der Figur 1 dargestellten Ruhestellung in Richtung zur Arbeitsfläche 9. Die Heissklebefolie 2 wird zwischen der Stanzmatrize 6 und der Platte 10 eingeklemmt. Beim Durchgang der Grundfläche 11 durch die Stanzöffnung 13 trennt die Schneidkante 14 ein in Form und Grösse durch die Grundfläche 11 vorbestimmtes Etikett 17 (Figur 2) mit dem Motiv aus der Heissklebefolie 2 ab.

Der Stempel 5 (Figur 3) presst mittels der Platte 10 das ausgestanzte Etikett 17 auf die vorbestimmte Stelle des Substrats 15. Die geheizte Platte 10 überträgt Wärmeenergie auf das Etikett 17, wobei die Wärme bis zur Kleberschicht 4 vordringt. Der Kleber schmilzt und verbindet sich mit dem Substrat 15. Nach einer vorbestimmten Zeit wird der Stempel 5 wieder in seine Ruhestellung zurückgezogen. Für beide Arbeitsgänge, das Ausstanzen und das Aufkleben, dient der gleiche Stempel 5.

Nach dem Erkalten des Klebers ist das Etikett 17 (Figur 4) fest mit dem Substrat 15 verbunden. Das mit dem Etikett 17 beklebte Substrat 15 wird durch eine hier nicht gezeigte Vorrichtung von der Arbeitfläche 9 entfernt.

Gegenüber dem Stand der Technik verbindet die beschriebene Vorrichtung einen unmittelbar vor dem Aufkleben des Etiketts 17 durchzuführenden Stanzvorgang zum Ausstanzen mit dem Aufkleben des Etiketts 17. Da die Etiketts 17 nicht, wie in der US-PS-4 826 213 beschrieben, einzeln nacheinander auf ein Trägerband als Zwischenträger geklebt werden müssen, sondern direkt aus der Heissklebefolie auf das Substrat aufgeklebt werden, ergibt sich eine viel genauere Positionierung der Etiketts 17 auf den Substraten 15 sowie eine schonendere Behandlung der vor dem Aufkleben empfindlichen Etiketts 17. Da kein teueres silikonisiertes Trägerband benötigt wird, ist die Vorratsrolle 1 bei gleicher Anzahl Etiketts 17 kleiner, leichter und kostengünstiger.

Damit die Etiketts 17 auf dem Substrat 15 eine gleichmässige vorbestimmte Haftkraft entwickeln, ist die Wärmezufuhr zur Platte 10 (Figur 1) mit Vorteil mittels eines hier nicht gezeigten Regelgerätes gesteuert. Das Regelgerät ist mit einem Temperaturfühler 18 verbunden, der die Temperatur der Platte 10 abtastet und dem Regelgerat allfällige Abweichungen von einer durch das Material der Kleberschicht 4 vorbestimmten, am Regelgerät einstellbaren Solltemperatur der Platte 10 meldet. Das Regelgerät erhöht oder drosselt die Wärmezufuhr derart, dass diese Abweichungen einen minimalen Wert anstreben.

Das Band der Heissklebefolie 2, aus der die Motive ausgestanzt sind, wird beispielsweise auf einen hier nicht gezeigten Dorn aufgerollt und dem Abfall zugeführt.

Vorteilhaft weisen der Stempel 5 und die Platte 10 wenigstens einen Luftkanal 19 auf. Sobald die Grundfläche 11 auf die Heissklebefolie 2 abgesenkt ist, wird von einem hier nicht gezeigten Mittel in den Luftkanälen 19 ein atmosphärischer Unterdruck erzeugt, damit das ausgestanzte Etikett 17 (Figur 2) nicht von der Platte 10 auf das Substrat 15 fällt und anschliessend in einer unkontrollierbaren Lage auf das Substrat 15 geklebt wird.

Kurz vor dem Abheben der Platte 10 vom aufgeklebten Etikett 17 wird der Druck in den Luftkanälen 19 (Figur 1) wieder dem Umgebungswert angeglichen. Mit einem leichten Ueberdruck in den Lüftungskanälen 19 wird mit Vorteil ein Trennen der Grundfläche 11 von der Schutzschicht 3 unterstützt.

In der Ausführung gemäss der Figur 5 sind der Stempel 5 und die Platte 10 wiederum senkrecht zur Arbeitsfläche 9 des Auflagers 7 verschiebbar. Ein Messer 20 begrenzt wenigstens die Grundfläche 11 der Platte 10 und weist auf der der Heissklebefolie 2 zugewandten Seite eine Schneidkante 14 auf. Die Schneidkante 14 steht vorteilhaft um ein vorbestimmtes Mass, das höchstens der Dicke der Heissklebefolie 2 entspricht, über der Grundfläche 11 vor, wobei während des Aufklebens der Heissklebefolie 2 das Etikett 17 (Figur 4), ohne das Substrat 15 zu verletzen, ausgestanzt wird.

Die Heissklebefolie 2 ist unmittelbar über das zu beklebende Substrat 15 gespannt, das in einer vorbestimmten Lage auf der Arbeitsfläche 9 liegt. Die hier nicht gezeigte Steuereinrichtung richtet jedes einzelne Motiv auf die zum Aufkleben vorbestimmte Stelle des Substrats 15 aus.

Sobald das Messer 20 auf die Heissklebefolie abgesenkt ist, dringt die Schneidkante 14 durch die Schutzschicht 3 hindurch bis höchstens in die Kleberschicht 4 hinein, damit das Substrat 15 nicht beschädigt wird, und stanzt das Etikett 17 (Figur 4) zum Aufkleben auf das Substrat 15 aus. Die Grundfläche 11 (Figur 5) kommt jetzt in den Wärmekontakt mit der Schutzschicht 3 der ausgestanzten Heissklebefolie 2 und presst sie bis zum Aufschmelzen des Klebers auf das Substrat 15.

Das Messer 20 mit der Schneidkante 14 kann direkt aus dem Stempel 5 oder aus der Platte 10 in einem Stück gearbeitet sein. Vorteilhafter ist ein vom Stempel 5 abnehmbares Messer 20, beispielsweise in Form eines Zylinders, wie dies in der Figur 5 dargestellt ist, der verstellbar ist, damit die Höhe der Schneidkante 15 über der Grundfläche 11 auf das vorbestimmte Mass fest einstellbar ist.

Mit Vorteil ist das Messer 20 gegenüber dem Stempel 5 verschiebbar gelagert und wird von einem hier nicht gezeigten Mittel auf ein Kommando der Steuereinrichtung in Richtung zur Arbeitsebene 9 in seine Arbeitsstellung vorgeschoben, in der die Schneidkante 14 um das vorbestimmte Mass über der Grundfläche 11 vorsteht.

Beim Aufkleben presst der Stempel 5 die durch die Grundfläche 11 vorbestimmte Fläche der Heissklebefolie 2 auf das Substrat 15. Während des Aufheizens der Kleberschicht 4 wird das Messer 20 in seine Arbeitsstellung gebracht und stanzt das Etikett 17 (Figur 4) aus. Anschliessend werden der Stempel 5 und das Messer 20 in ihre Ruhestellung zurückgefahren.

Mit Vorteil ist ein Niederhalter 21 vorgesehen, der die Platte 10 in einem ausreichenden Abstand umgibt und auf die Heissklebefolie 2 absenkbar ist. Der Niederhalter 21 drückt die Heissklebefolie 2 unmittelbar vor dem Absenken des Stempels 5 auf die Stanzmatrize 6 bzw. direkt auf das Substrat 15, sichert ein faltenfreies Aufliegen der Heissklebefolie 2 und hält die Heissklebefolie 2 in ihrer Lage während einer vorbestimmten Zeit fest, bis das Aufkleben beendet ist. Zusammen mit dem Stempel 5 wird der Niederhalter 21 wieder in die Ruhestellung zurückgefahren. Die dazu notwendigen, hier nicht gezeigten Antriebe werden von der Steuereinrichtung mit den Bewegungen des Stempels 5 synchronisiert.

Mit Vorteil sind der Stempel 5 (Figur 2) und die Platte 10 seitlich verschiebbar, so dass der Weg der Substrate 15 nicht unter das Band der Heissklebefolie 2 geleitet werden muss. Unmittelbar nach dem Ausstanzen des Etiketts 17 wird der Stempel 5 mit dem Etikett 17 über die Ebene der Heissklebefolie 2 zurückgezogen, so dass unbehindert von der Heissklebefolie 2 das Etikett 17 auf eine vorbestimmte Stelle eines Substrates 15′ (Figur 1) ausgerichtet werden kann, das ausserhalb der Stanzeinrichtung auf einem als Auflager 7 dienender Tisch 22 in der vorbestimmten Lage festgehalten ist.

Beispielsweise ist die Führung 8 auf einer Gleitschiene als Arm 23 seitlich verschiebbar befestigt. Ein hier nicht gezeigter Antrieb verschiebt den Stempel 5 in seiner Ruhestellung in der Führung 8 auf dem Arm 23 zwischen wenigstens zwei vorbestimmten Stellungen. In der ersten Stellung, die z. B. durch einen Stellring 24 als Anschlag definiert ist, ist der Stempel 5 zum Stanzen auf die Stanzöffnung 13 ausgerichtet. In einer der anderen vorbestimmten Stellungen ist der Stempel 5 zum Aufkleben auf eine vorbestimmte Stelle des Substrats 15′ ausgerichtet. Ist nur eine solche Stellung zum Aufkleben vorgesehen, ist sie z. B. mittels eines Klemmrings 25 als Anschlag vorbestimmt.

In einer anderen Variante der Vorrichtung ist mit Vorteil eine Klebevorrichtung, die die Teile 5, 6, 8 und 10 bzw. 5, 8, 10 und 20 (Figur 5), die Vorratsrolle 1 und die hier nicht gezeigten Elemente zum Führen der Heissklebefolie 2 umfasst, auf dem Arm 23 in allen Richtungen schwenkbar befestigt. Nicht gezeigte gesteuerte Antriebe richten die Klebevorrichtung auf eine vorbestimmte, ebene und beliebig im Raum orientierte Stelle des auf dem Tisch 22 festgehaltenen Substrats 15′ aus.

Mit dieser Klebevorrichtung lassen sich vorteilhaft auch Substrate 15 (Figur 4) mit dem Etikett 17 bekleben, die ebene Teilflächen eines Körpers sind.

Bei diesen Klebevorrichtungen ist der Niederhalter 21 vorteilhaft eingesetzt, damit in jeder Lage der Klebevorrichtung die Heissklebefolie 2 glatt und faltenfrei über das Substrat 15 bzw. über die Stanzmatrize 6 (Figur 1) ausgebreitet ist.

Die Klebevorrichtung kann als manuell geführte, tragbare Vorrichtung ausgestaltet sein, die mit Vorteil zum Aufkleben von kleinen Etiketts 17 eingesetzt wird, wenn das Etikett 17 nicht mit hoher Genauigkeit auf das Substrat 15 geklebt werden muss oder falls eine geringe Anzahl von gleichen Substraten 15 zu bekleben sind.

Zum Verschieben kann auch ein elektronischer schrittgesteuerter Antrieb verwendet werden. Der Antrieb fährt jeweils eine der vorbestimmten Stellen durch Abzählen der zurückgelegten Schritte und durch Vergleichen mit einer vorbestimmten Schrittzahl an.

## Patentansprüche

1. Vorrichtung zum Aufkleben von Heißklebefolien (2) auf ein auf einem Auflager (7; 22) liegenden Substrat (15; 15′) unter Anwendung von Wärme und Druck mit einer geheizten, mittels eines sowohl zum Ausstanzen als auch zum Aufkleben des Etiketts (17) eingerichteten Stempels (5), der mit einer zum Ausstanzen des Etiketts (17) dienenden Schnittkante (14) versehen ist,
**dadurch gekennzeichnet**,
daß der Stempel (5) eine absenkbare Platte (10) mit einer parallel zum Substrat (15; 15) ausgerichteten, heizbaren ebenen Grundfläche (11) aufweist, deren Berandung eine Schneidkante (14) aufweist, die beim Absenken der Platte (10) ein Etikett (17) aus der Heißklebefolie (2) ausstanzt, und die Platte (10) zum Aufkleben des Etiketts (17) auf eine Stelle des Substrats (15; 15′) das Etikett (17) unter Wärmekontakt auf das Substrat (15; 15′) preßt.

2. Vorrichtung nach Anspruch 1,
**dadurch gekennzeichnet**,
daß die Schneidkante (14) durch ein die Berandung der heizbaren ebenen Grundfläche (11) der Platte (10) begrenzendes Messer (20) gebildet ist.

3. Vorrichtung nach Anspruch 1 oder 2,
**dadurch gekennzeichnet**,
daß der Stempel (5) wenigstens einen in der Grundfläche (11) mündenden Luftkanal (19) aufweist und daß wenigstens vom Ausstanzen des Etiketts (17) bis zum Aufsetzen des Stempels (5) auf das Substrat (15 bzw. 15′) im Luftkanal (19) ein Unterdruck herrscht.

4. Vorrichtung nach Anspruch 2 oder 3,
**dadurch gekennzeichnet**,
daß die Schneidkante (14) des Messers (20) beim Ausstanzen des Etiketts (17) die Grundfläche (11) um ein vorbestimmtes Maß überragt, das höchstens der Dicke der zu durchtrennenden Heißkle befolie (2) entspricht.

5. Vorrichtung nach Anspruch 4,
**dadurch gekennzeichnet**,
daß da Messer (20) mit dem Stempel (5) fest verbunden ist.

6. Vorrichtung nach Anspruch 4,
**dadurch gekennzeichnet**, daß de Stempel (5) ein Mittel zum Verschieben des Messers (20) entlang des Stempels (5) aufweist und daß nur beim Ausstanzen des Etiketts (17) die Schnittkante (14) die Grundfläche (11) um das vorbestimmte Maß überragt.

7. Vorrichtung nach Anspruch 1 oder 3,
**dadurch gekennzeichnet**,
daß eine Stanzmatrize (6) unter der Heißklebefolie (2) angeordnet ist, daß die Stanzmatrize (6) und die Platte (10) mit der Grundfläche (11) als Schneidwerkzeug ausgebildet sind, daß die Grundfläche (11) ringsum mit der Schneidkante (14) begrenzt ist und daß beim Durchgang der Grundfläche (11) durch eine Stanzöffnung (13) der Stanzmatrize (6) ein Ausstanzen des Etikett (17) aus der Heißklebefolie (2) erfolgt.

8. Vorrichtung nach Anspruch 7,
**dadurch gekennzeichnet**,
daß das Substrat (15) unterhalb der Stanzmatrize (6) angeordnet ist, daß der Stempel (5) nur längs seiner Achse senkrecht zur Stanzmatrize (6) bewegbar und zum Absenken durch die Stanzöffnung (13) hindurch bis auf das Substrat (15) eingerichtet ist.

9. Vorrichtung nach Anspruch 7,
**dadurch gekennzeichnet**,
daß der Stempel (5) senkrecht zu seiner Längsachse verschiebbar ist und wenigstens zwei Stellungen aufweist, von denen eine erste Stellung des Stempels (5) zum Ausstanzen des Etiketts (17) auf einer vorbestimmten Stelle des Substrats (15′) dient.

10. Vorrichtung nach einem der vorhergehenden Ansprüche,
**dadurch gekennzeichnet**,
daß eine Klebevorrichtung, die mindestens aus dem Stempel (5), der Führung (8), der Platte (10) und der Heißklebefolie (2) besteht, zum Aufkleben des Etiketts (17) auf die vorbestimmte Stelle des Substrats (15 bzw. 15′) gegenüber dem Auflager (7 bzw. 22) räumlich ausrichtbar ist.

11. Vorrichtung nach einem der vorhergehenden Ansprüche,
**dadurch gekennzeichnet**, daß der Stempel (5) zum Regeln der Oberflächentemperatur der Grundfläche (11) einen Temperaturfühler (18) aufweist.

## Claims

1. Apparatus for sticking hot-setting adhesive foils (2) on to a substrate (15; 15′) disposed on a support (7; 22), using heat and pressure, with a heated pressing member (5) which is designed both for stamping out and also for sticking on the label (17) and which is provided with a cutting edge (14) serving for stamping out the label (17), characterised in that the pressing member (5) has a lowerable plate (10) with a heatable flat bottom surface (11) which is oriented parallel to the substrate (15; 15′) and whose edge portion has a cutting edge (14) which when the plate (10) is lowered stamps a label (17) out of the hot-setting adhesive foil (2) and the plate (10), for sticking the label (17) on to a location on the substrate (15; 15′), presses the label (17) in a condition of heat contact on to the substrate (15; 15′).

2. Apparatus according to claim 1 characterised in that the cutting edge (14) is formed by a blade (20) which delimits the edge portion of the heatable flat bottom surface (11) of the plate (10).

3. Apparatus according to claim 1 or claim 2 characterised in that the pressing member (5) has at least one air passage (19) which opens in the bottom surface (11) and that a reduced pressure obtains in the air passage (19) at least from the operation of stamping out the label (17) until the pressing member (5) is applied to the substrate (15 or 15′).

4. Apparatus according to claim 2 or claim 3 characterised in that in the operation of stamping out the label (17) the cutting edge (14) of the blade (20) projects beyond the bottom surface (11) by a predetermined dimension which corresponds at most to the thickness of the hot-setting adhesive foil (2) to be severed.

5. Apparatus according to claim 4 characterised in that the blade (20) is fixedly connected to the pressing member (5).

6. Apparatus according to claim 4 characterised in that the pressing member (5) has a means for displacement of the blade (20) along the pressing member (5) and that it is only in the operation of stamping out the label (17) that the cutting edge (14) projects beyond the bottom surface (11) by the predetermined dimension.

7. Apparatus according to claim 1 or claim 3 characterised in that a stamping die (6) is disposed under the hot-setting adhesive foil (2), that the stamping die (6) and the plate (10) with the bottom surface (11) are in the form of a cutting tool, that the bottom surface (11) is defined therearound by the cutting edge (14), and that, when the bottom surface (11) passes through the stamping opening (13) of the stamping die (6), the label (17) is stamped out of the hot-setting adhesive foil (2).

8. Apparatus according to claim 7 characterised in that the substrate (15) is arranged beneath the stamping die (6), that the pressing member (5) is movable only along its axis perpendicularly to the stamping die (6), and is designed to be lowered through the stamping opening (13) on to the substrate (15).

9. Apparatus according to claim 7 characterised in that the pressing member (5) is displaceable perpendicularly to its longitudinal axis and has at least two positions of rich a first position of the pressing member (5) serves for stamping out the label (17) on a predetermined location on the substrate (15′).

10. Apparatus according to one of the preceding claims characterised in that a glueing apparatus rich comprises at least the pressing member (5), the guide (8), the plate (10) and the hot-setting adhesive foil (2) can be spatially aligned relative to the support (7 or 22) for sticking the label (17) on to the predetermined location on the substrate (15 or 15′).

11. Apparatus according to one of the preceding claims characterised in that the pressing member (5) has a temperature sensor (18) for regulating the surface temperature of the bottom surface (11).

## Revendications

1. Dispositif pour coller des feuilles collables à chaud (2) sur un substrat (15 ; 15′) situé sur un support (7 ; 22), en opérant à chaud et sous pression avec un poinçon (5), agencé aussi bien pour un découpage par poinçonnage que pour un collage de l'étiquette (17) et qui est pourvu d'une arête de coupe (14) servant au découpage de l'étiquette (17), caractérisé en ce que le poinçon (5) comporte une plaque (10) pouvant être abaissée et pourvue d'une surface de base (11) plane, chauffable, orientée parallèlement au substrat (15 ; 15′) et dont le bord comporte une arête de coupe (14) qui, lors de la descente de la plaque (10), découpe par poinçonnage une étiquette (17) dans la feuille collante à chaud (2) et la plaque (10) applique, pour un collage de l'étiquette (17) en un endroit du substrat (15 ; 15′), l'étiquette (17), avec contact de chauffage, sur le substrat (15 ; 15′).

2. Dispositif selon la revendication 1, caractérisé en ce que l'arête de coupe (14) est constituée par une lame (20) délimitant le bord de la surface de base plane chauffable (11) de la plaque (10).

3. Dispositif selon la revendication 1 ou 2, caractérisé en ce que le poinçon (5) comporte au moins un canal d'air (19) débouchant dans la surface de base (11) et en ce qu'une dépression règne dans le canal d'air (19) au moins depuis le découpage de l'étiquette (17) par poinçonnage jusqu'à l'application du poinçon (5) contre le substrat (15 ou 15′).

4. Dispositif selon la revendication 2 ou 3, caractérisé en ce que l'arête de coupe (14) de la lame (20) fait saillie de la surface de base (11), lors du découpage par poinçonnage de l'étiquette (17), d'une distance prédéterminée qui correspond au maximum à l'épaisseur de la feuille collante à chaud (2) à poinçonner.

5. Dispositif selon la revendication 4, caractérisé en ce que la lame (20) est reliée rigidement au poinçon (5).

6. Dispositif selon la revendication 4, caractérisé en ce que le poinçon (5) comporte un moyen pour déplacer la lame (20) le long du poinçon (5) et en ce que, seulement lors du découpage de l'étiquette (17) par poinçonnage, l'arête de coupe (14) dépasse de la surface de base (11) de la distance prédéterminée.

7. Dispositif selon la revendication 1 ou 3, caractérisé en ce qu'une matrice de poinçonnage (6) est disposée en dessous de la feuille collante à chaud (2), en ce que la matrice de poinçonnage (6) et la plaque (10) sont agencées avec la surface de base (11) sous la forme d'un outil de découpage, en ce que la surface de base (11) est délimitée sur son pourtour par l'arête de coupe (14) et en ce que, lors du passage de la surface de base (11) à travers une ouverture de poinçonnage (13) de la matrice de poinçonnage (6), l'étiquette (17) est découpée par poinçonnage dans la feuille collante à chaud (2).

8. Dispositif selon la revendication 7, caractérisé en ce que le substrat (15) est disposé en dessous de la matrice de poinçonnage (6), en ce que le poinçon (5) est déplaçable seulement le long de son axe perpendiculairement à la matrice de poinçonnage (6) et est agencé pour se déplacer, lors de la descente à travers l'ouverture de poinçonnage (13), jusqu'au substrat (15).

9. Dispositif selon la revendication 7, caractérisé en ce que le poinçon (5) est déplaçable perpendiculairement à son axe longitudinal et comporte au moins deux positions dont une première position du poinçon (5) sert au découpage de l'étiquette (17) par poinçonnage en un endroit prédéterminé du substrat (15′).

10. Dispositif selon une des revendications précédentes, caractérisé en ce qu'un dispositif de collage, qui se compose au moins du poinçon (5), du guide (8), de la plaque (10) et de la feuille collante à chaud (2), peut être aligné dans l'espace par rapport au support (7 ou 22) en vue du collage de l'étiquette (17) à l'endroit prédéterminé du substrat (15 ou 15′).

11. Dispositif selon une des revendications précédentes, caractérisé en ce que le poinçon (5) comporte un capteur de température (18) pour une régulation de la température superficielle de la surface de base (11).
